# EUROPEAN PATENT SPECIFICATION

(11) **EP 1 989 245 B1**
(45) Date of publication and mention of the grant of the patent: **09.03.2011**
(21) Application number: 07704484.0
(22) Date of filing: 09.02.2007
(51) Int. Cl.: C08G 63/85, C08G 63/80

(54) **POLYESTER SOLID PHASE POLYMERIZATION CATALYST FOR LOW ACETALDEHYDE GENERATING RESINS**
POLYESTER-FESTPHASENPOLYMERISATIONSKATALYSATOR FÜR WENIG ACETALDEHYD ERZEUGENDE HARZE
CATALYSEURS DE POLYMERISATION EN PHASE SOLIDE DE POLYESTER POUR RESINE AYANT UN FAIBLE TAUX DE GENERATION D'ACETALDEHYDE

(30) Priority: 10.02.2006 US 772192 P
(43) Date of publication of application: 12.11.2008
(73) Proprietor: M & G Polimeri Italia S.P.A., 03010 Patrica (FR) (IT)
(72) Inventor: MASSEY, Fred, L., Uniontown, Ohio 44685 (US); CALLANDER, Douglas, David, Sharon Center, Ohio 44274-0590 (US)
(74) Representative: Gerbino, Angelo
(86) International application number: PCT/EP2007/051269
(87) International publication number: WO 2007/090885

(56) References cited:
- EP-A2- 0 774 477
- GB-A- 1 236 949
- US-A- 3 660 358
- US-A- 5 714 570
- US-A- 6 160 085

## Description

This patent application claims the benefit of the priority of United States Provisional Patent Application Serial No. 60/772,192 filed 10 February, 2006.

### Field of invention

This invention relates to the field of manufacturing polyester resins utilizing a solid phase polymerization process to more rapidly polycondense the polyester resin yet still produce a polyester resin with a low acetaldehyde generation rate.

### Background

Polyester resins used in packaging have unique requirements. They are usually manufactured by making a low to medium molecular weight polymer in the liquid phase, pelletizing the polymer and then subjecting those pellets to solid phase polymerization to further increase the molecular weight. It is well known in the art that some catalysts (e.g. titanium) work very well in the liquid, or melt polymerization step, but do not catalyze the reaction in the solid phase step.

The catalyst choice is also important because it is also known that different catalysts will affect the amount of acetaldehyde generated when the polyester resin is remelted and injection molded into a preform or cast into a sheet. Acetaldehyde minimization is a particular goal for packages used to hold water. The acetaldehyde is absorbed from the package into the water negatively affecting the taste of the water.

There exists therefore a need to have a catalyst or catalyst system which will provide acceptable solid phase polymerization rates yet form a reduced amount of acetaldehyde.

It has been discovered that the combination of tin and antimony provide just such a catalyst system.

The use of antimony and tin catalyst combinations are well known in the old polyester art. JP 54-135896, published. October 22, 1979 discloses the use of the antimony, tin, cobalt and an alkali metal during melt polycondensation catalyst to produce a good color resin for films. JP 54-135896 discloses nothing about the catalyst ability to function as a solid phase polymerization catalyst or the role of the catalyst in reducing the amount of acetaldehyde generated during subsequent melt processing.

JP 52-123489, published October 17, 1977 discloses the use of the antimony and tin during melt polycondensation catalyst to produce a good color resin for films. JP 52-123489 discloses nothing about the catalyst ability to function as a solid phase polymerization catalyst or the role of the catalyst in reducing the amount of acetaldehyde generated during subsequent melt processing.

JP 53-052595, published May 13, 1978 discloses the use of the antimony and tin during melt polycondensation catalyst to produce a good color resin for films. JP 53-052595 discloses nothing about the catalyst ability to function as a solid phase polymerization catalyst or the role of the catalyst in reducing the amount of acetaldehyde generated during subsequent melt processing.

GB 1236949, published June 23, 1971, discloses the use of antimony and tin as a catalyst for the melt polycondensation of polyester for use in fibers. GB 1236949 discloses nothing about the catalyst ability to function as a solid phase polymerization catalyst or the role of the catalyst in reducing the amount of acetaldehyde generated during subsequent melt processing.

United States Patent Number 5,714,570 discloses the use of antimony, tin, in combination with titanium as a melt polycondensation catalyst. United States Patent Number 5,714,570 discloses nothing about the catalyst ability to function as a solid phase polymerization catalyst or the role of the catalyst in reducing the amount of acetaldehyde generated during subsequent melt processing.

US-A-6 160 085 discloses a process for the production of a polyester resin comprising the steps of polycondensing such resin in the presence of an amount of 180 ppm of Sb catalyst, and solid state polymerizing the product of the previous polycondensation in order to increase the intrinsic viscosity of the polyester.

### Summary

This invention discloses a process for producing a polyester resin having a low acetaldehyde generation rate comprised of polycondensing the polyester resin in the presence of tin and antimony; wherein the tin is present within the range of 50 to 110 ppm of the polyester resin and the antimony is present from 105 ppm to 265 ppm of the polyester resin, and solid phase polymerizing the polyester resin for sufficient time so as to increase the intrinsic viscosity of the polyester resin by at least 0.15 dUg.

Further disclosed is a catalyst composition for producing a low acetaldehyde generation polyester resin using a solid state process, wherein said catalyst composition comprises tin and antimony; wherein the tin is present within the range of 50 to 110 ppm of the polyester resin and the antimony is present from 105 ppm to 265 ppm of the polyester resin, and wherein the catalyst further comprises a molar equivalent amount of cobalt and phosphorous, wherein the cobalt is present at less than 15 ppm of the polyester resin.

### Detailed description

This invention is based upon the discovery the antimony-tin combination can be used in the solid phase polymerization process, yet at the same time exhibits a reduced catalytic activity to the formation of acetaldehyde when the polyester resin is subsequently processed. This allows one to take advantage of the rapid melt polymerization of the antimony tin combination, while at the same time obtaining the low acetaldehyde generation rate.

While virtually any non-elemental antimony compound will work, the preferred antimony compounds used as the catalyst for preparing polyesters includes antimony oxides, such as antimony trioxide, antimony tetraoxide or antimony pentoxide, antimony halides, such as antimony trichloride or antimony trifluoride, antimony carboxylates, such as antimony triacetate, antimony tristearate, antimony tribenzonate, antimony tri-2-ethylhexanoate or antimony trioctoate, a compound of antimony combined with ether, such as antimony trimethoxide, antimony ethylene glycoxide, antimony triisopropoxide, antimony tri-n-butoxide and antimony triphenoxide, antimony hydroxide, and antimony sulfides. Of these compounds, antimony trioxide and antimony triacetate are particularly preferred.

As with antimony, virtually any non-elemental tin compound will work. The preferred organotin catalysts for use in the present invention all include at least one direct carbon-to-tin bond and one direct oxygen-to-tin bond. They can be described by the general formula:

Rₘ Sn(OX)

in which
R may be the same or different when more than one R is present,
R is an alkyl of 1 to about 20 carbon atoms, or an aryl, alkaryl or cycloalkyl of 6 to about 14 carbon atoms, and R may be saturated or unsaturated, substituted or unsubstituted; and
m may equal 1 or 2, provided that
when m=1,(OX) represents O_{1.5},(O)OH or (OR')₃ ; and
when m=2,(OX) represents O or (OR')₂;
wherein R' may be the same or different when more than one R' is present, and R' is hydrogen, an alkyl of 1 to about 20 carbon atoms, or the residue of a monofunctional or multifunctional alcohol, carboxylic acid, or ester;
provided that when R' is the residue of a multifunctional alcohol, carboxylic acid, or ester, including one having two or more hydroxyl groups, two or more carboxylic acid groups, or one of each, then the organotin compound may contain two or more organotin moieties in the same molecule bonded to each other through the residue of the multifunctional anion, such that in each instance in which a multifunctional anion is attached to two or more tin atoms, the organotin catalyst may be a dimer, a trimer or a higher molecular-weight polymer; and furthermore, when (OX) represents (OR')₂ or (OR')₃, one or two of the (OR') groups, respectively, may be replaced by an anion bonded to the tin through a non-oxygen atom, such as sulfur, phosphorus, or nitrogen, or a monovalent ion, such as a halide, bonded directly to the tin.

The triorganotin content of the catalysts of the present invention should preferably be less than 5 percent. Triorganotin compounds (i.e. m=3 in the above formula) do not fall within the scope of the above formula, but are often undesirable by-products in the manufacture of other organotin compounds. Because triorganotin compounds are generally considered toxic, their content in the catalysts should be minimized. Heavy metals are also undesirable impurities, and, therefore, the heavy-metal content of the catalyst is preferably less than 200 parts per million (ppm).

The organotin catalysts of the present invention may comprise one or more organotin compounds in accordance with the above formula. However, each component organotin compound should preferably have a purity of at least 90 percent.

Examples of the organotin catalysts of this invention exemplified by the generic formula R₍ₘ₎ Sn(OX) include those in the following Table I:

**TABLE I - SAMPLE TIN COMPOUNDS**

| Organotin Oxides--of the type R₂ SnO: | Bis (carbomethoxyethyl) tin oxide | Diallyltin oxide |
|---|---|---|
| Dibenzyltin oxide | Dibutyltin oxide | Dicyclohexyltin oxide |
| Didodecyltin oxide | Diisobutyltin oxide | Dimethyltin oxide |
| Di-1-naphthyltin oxide | Dioctyltin oxide | Diphenyltin oxide |
| Di-o-tolyltin oxide | Divinyltin oxide. | Organotin Hydroxides--of the type R₂ Sn(OH)₂ or R₂ Sn(OH)Y, wherein Y is a halide: Dibutylchlorotin hydroxide |
| Dicyclohexyltin dihydroxide | Dibutyltin dihydroxide | Dibenzyltin dihydroxide |
| Didodecyltin dihydroxide | Dimethyltin dihydroxide | Dioctyltin dihydroxide |
| Di-o-tolyltin dihydroxide. | Organotin Alkoxides--of the type R₂ Sn(OR')₂ or R-- Sn(OR')₃ : | Dibutyl bis (benzyloxy) tin |
| Didodecyl bis (benzyloxy) tin | Dibutyldibutoxytin | Dimethyldibutoxytin |
| Dibutyldimethoxytin | Dibutyldiphenoxytin | Dibutyltin (0,0) - bis (methylricinoleate) |
| Monobutyltin trimethoxide | Monobutyltin tributoxide | Monomethyltin trimethoxide |
| Monomethyltin tributoxide | Dibutylmethoxybutoxytin | Dibutyltin ethylene glycoxide. |
| Organostannoic Acids--of the type R--SnOOH, or their corresponding anhydrides of the | type (RSnO)₂ O: | Phenylstannoic acid |
| Chlorobenzylstannoic acid | 1-dodecenylstannoic acid | Methylstannoic acid |
| 1-naphthylstannoic acid | p-tolylstannoic acid | Butylstannoic acid |
| Octylstannoic acid. | Carboxylic Acid Derivatives--of the type R₂ Sn(O₂ CR')₂,R₂ Sn(O₂ CR')(OCR'), R--Sn(O₂ CR')3, or R--Sn(O₂ CR')₂ Y, wherein Y is a halide: | Dibenzyltin diacetate |
| Dibenzyltin distearate | dibutylmethoxytin acetate | Dibutylmethoxytin butylmaleate |
| Dibutyltin bis (methylmaleate) | Dibutyltin dilaurate | Dimethyltin diacetate |
| Dibutyltin phthalate | Dibutyltin maleate | Dibutyltin oxalate |
| Dibutyltin terephthalate | Dioctyltin diacetate | Dioctyltin dilaurate |
| Diphenyltin diacetate | Divinyltin dilaurate | Methyltin trilaurate |
| Methyltin triacetate | Methyltin tris (2-ethylhexoate) | Butyltin trilaurate |
| Butyltin triacetate | Butyltin tris (2-ethylhexoate) | Butyltin tris (lauryl maleate). |
| Butyltin bis (2-ethylhexoate) chloride | | |

Preferred organotin catalysts include, but are not limited to, hydroxybutyltin oxide (also known as butylstannoic acid), monobutyltin tris (2-ethylhexoate), and dibutyltin oxide.

Other non-organo tins, such as tin oxide are included as well.

The amount of tin present may be in the range from 30 to 120 parts per million of the polyester resin, with 35 to 110 and 50 to 100 parts per million of the polyester resin being more suitable amounts of tin.

The amount of antimony present may range from 95 to 300 parts per million of the polyester resin, with 105 to 285 and 105 to 265 parts per million of the polyester resin being more suitable.

Polyesters suitable for this invention are those polyesters which are capable of being solid phase polymerized. The polyester polymers and copolymers may be prepared by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. Polymers with two or more chemically different repeat units in the same macromolecule are termed copolymers. For clarity, a polymer of terephthalate, isophthalate and naphthalate with ethylene glycol, diethylene glycol and cyclohexanedimethanol contains six distinct monomers and is considered a copolymer. The diversity of the repeat units depends on the number of different types of monomers present in the initial polymerization reaction. In the case of polyesters, copolymers include reacting one or more diols with one or more diacids, and are sometimes also referred to as terpolymers. Additionally, randomization of the monomers is not necessary. A copolymer or terpolymer also refers to a polymer with different monomers be they in block or random distribution.

Suitable dicarboxylic acids include those comprising from 6 to 40 carbon atoms. Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalic esters and naphthalic diesters.

Also included are the monomers which create polyester ionomers such as metallo-sulfonates. Included in these are the sulfonated isophthalate salts of lithium, sulfur, and phosphorous.

These acids or esters may be reacted with an aliphatic diol having from 2 to 10 carbon atoms, a cycloaliphatic diol having from 7 to 14 carbon atoms, an aromatic diol having from 6 to 15 carbon atoms, or a glycol ether having from 4 to 10 carbon atoms. Suitable diols include, but are not limited to, 1,4-butenediol, trimethylene glycol, 1,6-hexanediol, 1,4-cyclohexanedimethanol, diethylene glycol, resorcinol, and hydroquinone.

Polyfunctional comonomers can also be used, typically in amounts of from 0.1 to 3 mole percent. Suitable comonomers include, but are not limited to, trimellitic anhydride, trimethylopropane, pyromellitic dianhydride (PMDA), and pentaerythritol. Polyester-forming polyacids or polyols can also be used.

One preferred polyester is polyethylene terephthalate (PET homopolymer) formed from the approximate 1:1 stoichiometric reaction of terephthalic acid, or its ester, with ethylene glycol. Another preferred polyester is polyethylene naphthalate (PEN homopolymer) formed from the 1:1 to 1:1.6 stoichiometric reaction of naphthalene dicarboxylic acid, or its ester, with ethylene glycol. Yet another preferred polyester is polybutylene terephthalate (PBT). PET copolymers, PEN copolymers, and PBT copolymers are also preferred. Specific co- and ter- polymers of interest are PET with combinations of isophthalic acid or its diester, 2,6 naphthalic acid or its diester, and/or cyclohexane dimethanol.

Another preferred polyester is polytrimethylene terephthalate (PTT). It can be prepared by, for example, reacting 1, 3-propanediol with at least one aromatic diacid or alkyl ester thereof. Preferred diacids and alkyl esters include terephthalic acid (TPA) or dimethyl terephthalate (DMT). Accordingly, the PTT preferably comprises at least 80 mole percent of either TPA or DMT. Other diols which may be copolymerized in such a polyester include, for example, ethylene glycol, diethylene glycol, 1,4-cyclohexane dimethanol, and 1,4-butanediol. Aromatic and aliphatic acids which may be used simultaneously to make a copolymer include, for example, isophthalic acid and sebacic acid.

The melt manufacture step of the polyester usually takes place in two steps, the first step is the reaction of the raw materials to form low molecular weight oligomers. This step is typically called the esterification step. In the ester process, it is known as the transesterification step. The low molecular weight oligomers are then subjected to a polycondensation step. It has been discovered, that it is preferred to add the catalyst composition of this invention after the esterification step, immediately prior to the polycondensation step to avoid needing an additional polycondensation catalyst.

After melt phase polymerization is completed, the liquid polymer is cooled and then made into pellets or chips. The polyester chips are crystallized and then solid phase polymerized (SSP) to increase the molecular weight, as measured by Intrinsic Viscosity, necessary for bottle manufacture. The crystallization and polymerization can be performed in a tumbler dryer reaction in a batch-type system. Alternatively, the crystallization and polymerization can be accomplished in a continuous solid phase process whereby the polymer flows from one vessel to another after its predetermined thermal treatment in each vessel.

The crystallization conditions for polyester preferably include a temperature of from 100°C to 150°C.

The solid phase polymerization conditions preferably include a temperature of from 200°C to 235°C, and more preferably from 215°C to 235°C and include passing a nitrogen sweep or applying a vacuum to remove the by-products from the increase in molecular weight. The solid phase polymerization may be carried out for a time sufficient to raise the molecular weight to the desired level, which will depend upon the application and initial intrinsic viscosity. For a typical bottle application, the preferred molecular weight corresponds to an intrinsic viscosity from 0.68 to 0.88 deciliter/gram, as determined by the methods described in the methods section. The time required to reach this molecular weight may range from 8 to 45 hours. Typical increases in I.V. are at least 0.1 dUg, with increases of 0.2 to 0.4 dUg being more typical.

### Experimental

### Working Example 1.

7607 g terephthalic acid, 235 g isophthalic acid, 0.0117 g colourant SB138, 0.0023 g colourant SV50, were charged to vessel containing a "heel" of approximately X g low molecular weight oligomers of the same final composition. The charged contents and heel were mixed at atmospheric pressure for 10 minutes and 267 °C.

After ten minutes, 3106 g of ethylene glycol, sufficient Sodium Acetate and H₃PO₄ to achieve 0.001 ppt Na, and 0.013ppt phosphorous on the basis of the final amount of polymer were added. The contents were then agitated at 275 - 278 °C, 3.378 bar until 1500 ml of water evolved (3 hrs, 11 minutes).

Approximately 1/3 the contents of the vessel were then transferred to a second vessel for polycondensation. The contents remaining in the first vessel forms the "heel" for the next fresh batch to be charged.

The contents of the second vessel were then polycondensed after adding 0.012 ppt on the basis of the final polymer of Cobalt, as Cobalt Acetate and mixing for 3 minutes, 0.130 ppt on the basis of the final polymer of Antimony, as antimony oxide, and mixing for three minute and 0.080 ppt on the basis of the final polymer of monobutyltin tris (2-ethylhexoate), 0.907 g FeP (iron phosphide) and 150g ethylene glycol. Polycondensation was carried by mixing the vessel at 272 °C and reducing the pressure from 720 torr (95,992 Pa) to 1 torr (133 Pa) over a period of 1 hour. After reaching 1.0 torr (133 Pa), the pressure was reduced to .1 torr (13.3 Pa) and then the polymer was polycondensed until a preestablished torque was reached at a constant agitator rpm. In this example, it was 26 minutes. It is this final step which is polycondensation reported in table I. The final polymer was then discharged into a strand and pelletized.

The properties of the polymer were 0.457 dUg intrinsic viscosity, 52 meq carboxyl 247 °C melt point, L* = 53.06, a* = -0.91, and b* = -2.67.

The melt polycondensed polymer was then solid phase polymerized in a rotary vacuum solid state reactor. Several batches of the melt resin were combined in a large rotary vacuum vessel and exposed to a crystallization step followed by the actual polymerization step. Crystallization was accomplished by lowering the pressure to 0.1 torr and setting the hot oil temperature to 120 °C for 3 hours. After the resin was crystallized, the oil temperature was increased to 230 °C and the polymer agitated in the rotating vessel until the final I.V. was attained. Samples were taken every 2 hours and analyzed for I.V. The solid state polymerization rate can be determined by the change in I.V. per unit time. In this particular example, the material was prematurely cooled at 0.719 dl/g and the reheated 2 hours to 0.745 dl/g final I.V.

The so lid phase polymerization rate for the uninterrupted cycle ending at 0.719 dl/g from 0.452 dl/g took place over 12 hours or 0.02225 dl/g/hr.

The acetaldehyde generation rate was determined by taking the finished polymer, injecting it into preforms at the same temperature, but at different cycle times. The preforms were then analyzed for acetaldehyde which had been formed during the injection cycle. From this information the acetaldehyde generation rate can be determined. One skilled in the art will also recognize the one could vary temperature and determined the kinetics as well. The acetaldehyde generation rate of this polymer was 1.81 ppm/minute.

### Comparative Examples

Several comparative examples were run varying the antimony and tin levels. Their data along with the working example are presented in Table II - RESULTS.

**Table II - RESULTS**

| I.D. | SB138 ppm | SV50 Ppm | Na ppm | P ppm | Co ppm | FeP Sb ppm | ppm | Sn ppm | Poly-condense time (min) | SSP IV rate dl/g/hr | AAGR ppm/min |
|---|---|---|---|---|---|---|---|---|---|---|---|
| W.E.1 | 12.9 | 2.5 | 1 | 12 | 12 | 100 | 130 | 80 | 25 | 0.022 | 1.81 |
| C1 | 12.9 | 2.5 | 1 | | | | 0 | 110 | 29 | 0.028 | 2.29 |
| C2 | 12.9 | 2.5 | 1 | 12 | 0 | 100 | 265 | 0 | 31 | 0.021 | 1.46 |

In the next set of experiments, depicted in Table III, the results were validated on a larger piece of continuous polyester manufacturing line. These show very similar AAGR (AA
generation rates with an increased polycondensation throughput of 7.5% for the claimed catalyst combination. While 7.5% improvement may seem small, large plants operating at 15 tonnes an hour means the plant is capable of producing 1.125 tonnes per hour more, or approximately 8,800 tonnes more per year.

**TABLE III - RESULTS OF CONTINUOUS TRIAL**

| I.D. | Na ppm | P ppm | Co ppm | Fe ppm | Sb ppm | Sn ppm | Relative Poly-condense rate | AAGR ppm/min |
|---|---|---|---|---|---|---|---|---|
| W.E.2 | 0 | 32.5 | | 1.3 | 251.4 | 37.1 | 1.075 | 1.93 |
| C3 | 0 | 31.7 | | | 307.2 | 0 | 1.00 | 1.74 |

### Methods

The intrinsic viscosity of intermediate molecular weight and low crystalline poly(ethylene terephthalate) and related polymers which are soluble in 60/40 phenol/tetrachloroethane can be determined by dissolving 0.1 gms of polymer or ground pellet into 25 ml of 60/40 phenol/tetrachloroethane solution and determining the viscosity of the solution at 30°C +/-0.05 relative to the solvent at the same temperature using a Ubbelohde 1B viscometer. The intrinsic viscosity is calculated using the Billmeyer equation based upon the relative viscosity.

The intrinsic viscosity of high molecular weight or highly crystalline poly(ethylene terephthalate) and related polymers which are not soluble in phenol/tetrachloroethane was determined by dissolving 0.1 gms of polymer or ground pellet into 25 ml of 50/50 trifluoroacetic Acid/Dichloromethane and determining the viscosity of the solution at 30 °C +/- 0.05 relative to the solvent at the same temperature using a Type OC Ubbelohde viscometer. The intrinsic viscosity is calculated using the Billmeyer equation and converted using a linear regression to obtain results which are consistent with those obtained using 60/40 phenol/tetrachloroethane solvent. The linear regression is I.V. in 60/40 phenol/tetrachloroethane = 0.8229 x IV in 50/50 trifluoroacetic Acid/Dichloromethane + 0.0124.

## Claims

1. A process for producing a polyester resin having a low acetaldehyde generation rate comprised of the steps of
polycondensing the polyester resin in the presence of tin and antimony;
wherein the tin is present within the range of 30 to 110 ppm of the polyester resin and the antimony is present from 95 ppm to 300 ppm of the polyester resin,
and
solid phase polymerizing the polyester resin for sufficient time so as to increase the intrinsic viscosity of the polyester resin by at least 0.15 dl/g.

2. A catalyst composition for producing a low acetaldehyde generation polyester resin using a solid state process, wherein said catalyst composition comprises tin and antimony; wherein the tin is present within the range of 30 to 110 ppm of the polyester resin and the antimony is present from 95 ppm to 300 ppm of the polyester resin; and
wherein the catalyst further comprises a molar equivalent amount of cobalt and phosphorous, wherein the cobalt is present at less than 15 ppm of the polyester resin.

## Patentansprüche

1. Verfahren zur Herstellung eines Polyesterharzes mit einer niedrigen Acetaldehyd-Erzeugungsgeschwindigkeit, welches die folgenden Schritte umfasst:
Polykondensieren des Polyesterharzes in Gegenwart von Zinn und Antimon;
wobei das Zinn innerhalb eines Bereiches von 30 bis 110 ppm des Polyesterharzes und das Antimon von 95 ppm bis 300 ppm des Polyesterharzes vorliegt,
und
Festphasenpolymerisation des Polyesterharzes für eine ausreichende Zeit, so dass sich die intrinsische Viskosität des Polyesterharzes um mindestens 0,15 dl/g erhöht.

2. Katalysatorzusammensetzung zur Herstellung eines gering Acetaldehyd erzeugenden Polyesterharzes unter Verwendung eines Festphasenverfahrens, wobei die Katalysatorzusammensetzung Zinn und Antimon umfasst;
worin das Zinn innerhalb eines Bereiches von 30 bis 110 ppm des Polyesterharzes und das Antimon von 95 ppm bis 300 ppm des Polyesterharzes vorliegt; und
wobei der Katalysator weiterhin eine molar äquivalente Menge Kobalt und Phosphor umfasst, wobei das Kobalt mit weniger als 15 ppm des Polyesterharzes vorliegt.

## Revendications

1. Procédé de production d'une résine polyester possédant un faible taux de production d'acétaldéhyde comprenant les étapes de :
polycondensation de la résine polyester en présence d'étain et d'antimoine, l'étain étant présent dans la plage allant de 30 ppm à 110 ppm de la résine polyester et l'antimoine étant présent dans la plage allant de 95 ppm à 300 ppm de la résine polyester ;
et
polymérisation en phase solide de la résine polyester pendant une durée suffisante pour augmenter la viscosité intrinsèque de la résine polyester par au moins 015 dl/g.

2. Composition catalytique pour la production d'une résine polyester possédant un faible taux de production d'acétaldéhyde en utilisant un procédé en phase solide, ladite composition catalytique comprenant de l'étain et de l'antimoine, dans laquelle l'étain est présent dans la plage allant de 30 ppm à 110 ppm de la résine polyester et l'antimoine est présent dans la plage allant de 95 ppm à 300 ppm de la résine polyester, et dans laquelle le catalyseur comprend en outre une quantité équivalente molaire de cobalt et de phosphore, le cobalt étant présent à moins de 15 ppm de la résine polyester.
